# EUROPEAN PATENT APPLICATION

(11) **EP 2 055 745 A1**
(43) Date of publication of application: **06.05.2009**
(21) Application number: 08168036.5
(22) Date of filing: 31.10.2008
(51) Int. Cl.: C08L 95/00, E01C 7/30

(54) **Bitumen modified with crumb rubber stable to storage**

(30) Priority: 31.10.2007 ES 200702878
(71) Applicant: Repsol YPF, S.A., 28046 Madrid (ES)
(72) Inventor: Martinez Boza, Francisco José, 28046, Madrid (ES); Partal Lopez, Pedro, 28046, Madrid (ES); Navarro Dominguez, Francisco Javier, 28046, Madrid (ES); Gallegos Montes, Crispulo, 28046, Madrid (ES); Paez Dueñas, Antonio¶, 28224 Pozuelo de Alarcón, Madrid (ES); Perez Lepe, Antonio, 28033 Madrid (ES)
(74) Representative: Pons Arino, Angel

(57) **Abstract**

Composition which comprises bitumen, crumb rubber, a polymer which can be vulcanized and a vulcanizing agent. Additionally, this composition may also comprise an accelerating agent of said vulcanization. Furthermore, the invention relates to the method to produce the composition, in one or several stages, and to its use in asphalt mixtures for its application on roads.

## Description

### TECHNICAL FIELD OF THE INVENTION

The present invention relates to a composition which comprises bitumen, crumb rubber, a polymer which can be vulcanized and a vulcanizing agent. Additionally, this composition may also comprise an accelerating agent of said vulcanization. Furthermore, the invention relates to the method to produce the composition and to its use in asphalt mixtures for its application on roads.

### PRIOR ART

The use of crumb rubber in asphalt mixtures for roads (or bituminous mixtures) is a channel frequently used to improve the properties thereof.

There currently exist two general methods of incorporation:
The so-called dry method, where the crumb rubber is indirectly incorporated in the bituminous mixture.
And the so-called wet method, where the crumb rubber is first incorporated in the asphaltic bitumen and, later, via asphaltic bitumen, in the bituminous mixture.
In this last method, two variants are carried out:
   - the crumb rubber is dispersed in the bitumen just before mixing the bitumen/tyre with the aggregates asphalt mixture at the Manufacturing Plant: or
   - the crumb rubber is incorporated in the bitumen constituting a mixture stable to storage which can be transported to the asphalt mixture manufacturing plant.

Once the bitumen-crumb rubber mixture is in the asphalt mixture manufacturing plant, it is mixed with the aggregates, constituting said asphalt mixture.

Following these methods, several systems and compositions have been developed. Thus, French Patent FR2580658 discloses a system
wherein an aromatic oil and an unsaturated elastomer are used to help in the digestion of the crumb rubber in bitumen, and European Patent EP0305225 discloses a manufacturing method which improves the stability of a composition: bitumen, crumb rubber, aromatic oil and elastomer as catalyst of said process, from 6 hours to ten days.

International Application W09927018 also discloses compositions wherein polymers of various types are used to improve the stability to storage of the bitumen/crumb rubber. The method to improve said stability is predispersing and swelling the polymer in oils before adding it to the bitumen modified with crumb rubber.

These swelling processes of the polymers by the oil of the bitumen or by those added later in the crumb rubber are very long and frequently the results may not be the desired ones.

On the other hand, European Patent EP0994161 discloses the use of a polyoctenamer (TOR) as a polymer to improve the stability to storage of the bitumens modified with crumb rubber. In this case, the polyoctenamer should react with the crumb rubber and with the bitumen serving as bridge between them. However, for some bitumens, the polyoctenamer does not react to the necessary extent with the asphaltic bitumen base as this has a chemical nature with sufficient reactive sites, making stability to final storage decrease.

Other systems may come to be stable provided that they remain stirred in the conditions wherein they are stored in the asphaltic bitumen tanks of the Asphalt Mixture Manufacturing Plants, such as, for example, patent US5959007, which discloses the joint addition of elastomeric polymers to a mixture of bitumen and crumb rubber. However, when the stirring phase concludes, separation occurs very quickly. In general, the asphalt mixture ligand storage tanks are not usually equipped with stirrers, which means that the crumb rubber cannot be stored easily. Additionally, there is also the risk in transport, since if the system is destabilized, no means to homogenize it again is currently known.

### EXPLANATION OF THE INVENTION

The authors of the present invention have discovered that by adding a polymer that may be vulcanized, a vulcanization agent and possibly a vulcanization accelerant to an asphaltic bitumen modified with crumb from the grinding of scrap tyres, bitumen/crumb rubber systems completely stable to storage are achieved.

Using this system, the composition of the invention is maintained stable during prolonged time periods in the storage tanks of the Asphalt Mixture Manufacturing Plants, without the need for stirring.

Therefore, the present invention provides a method for manufacturing a bitumen modified with crumb rubber, according to the wet method, which is completely stable to storage.

"Completely stable" is understood to mean that phase separation does not occur over time in the storage conditions.

With the method of the invention a steric stabilization is achieved, since the reticulated polymers form a network within the bitumen which prevents the sedimentation of the crumb rubber. This method can be carried out without the need for any swelling of the polymer or of the crumb rubber, nor an anchoring or bitumen/polymer/crumb rubber chemical reaction, nor a prior digestion or disintegration of the crumb rubber, although this may occur during its subsequent storage.

Furthermore, the synthetic polymer added to the composition is not made to react with the crumb rubber or with the bitumen, nor does it induce accelerated digestion of the crumb rubber or act as compatibilizer.

Therefore, a first aspect of the present invention relates to a composition which comprises bitumen, crumb rubber, polymer capable of being vulcanized and vulcanizing agent.

To manufacture the modified bitumens of the present invention, any type of bitumen can be used. Thus, we can cite, without limitations, the bitumens from the vacuum distillation units, of the deasphalted units or of the visbreaking units of the Oil Refining operations.

Scrap tyres generally contain the following components: natural rubber, synthetic rubber, sulfur and sulfur compounds, silica, phenolic resins, oils, fibres, waxes, pigments, carbon black, fatty acids, inert materials and steel. Once subjected to the recycling process to produce crumb rubber, fibres and steels are eliminated. Due to the heterogeneity of the material provided from the recycling plants, as well as the high content in solid materials and materials totally incompatible with bitumen, a different stabilization system is necessary, not based on compatibilization but on steric suspension.

The crumb rubber may come from, but without being limited to, a mechanical or cryogenic grinding. With regard to its source, the crumb from car tyres, lorry tyres or from any other vehicle, or any of their combinations in any proportion, can be used.

In a preferred embodiment, the crumb rubber has a particle size, of between 0.1 and 1 mm, and more preferably between 0.1 and 0.8 mm. The percentage in which it enters the mixture is between 1% and 50% by weight of the final composition, and more preferably between 1% and 30% by weight of the final composition.

Suitable polymers in the composition of the invention are unsaturated rubbers such as, for example, but without being limited to, styrene-butadiene-styrene (SBS), styrene-butadiene rubbers (SBR), natural rubber, polyisoprenes, polyisobutenes, nitrile-butadiene rubbers, acrylate-butadiene rubbers, polybutadienes, ethylene-propylene-diene monomer terpolymers, polyoctenomers (TOR), polynorbornene, polychloroprene or polyacrylates. They can be used alone or two or more of them can be used in any proportion. The percentage wherein the polymer enters to form part of the bitumen-rubber mixture is between 0.1 % and 10% by weight of the total composition and more preferably between 0.1% and 7% by weight of the total composition.

For the purpose of this invention, it is necessary to form a network of the polymer which is so compact that it prevents the decantation of the crumb rubber. This is achieved by introducing a vulcanizing agent in the system and, in a more preferred embodiment, the composition of the invention further comprises, if necessary, a vulcanization accelerant.

As vulcanizing agents, it is possible to use either elemental sulfur and/or sulfur donors, or phenolic resins or organic peroxides. The percentage wherein these vulcanizing agents enter the mixture are between 0.05 % and 5% by weight of the total composition.

Non-limitative examples of sulfur donors may be dipentamethylenthiuram tetrasulfide, tetramethylthiuram disulfide, tetrabenzylthiuram disulfide, tetraethylthiuram disulfide or tetramethylthiuram monosulfide.

Both the sulfur and sulfur donors can be used alone or mixed in any proportion. The percentage in which they enter the mixture is up to 5% by weight of the total composition.

Non-limitative examples of phenolic resins are the resins of phenol formaldehyde and alkylphenolformaldehyde. The percentage in which these products enter the formulations is up to 5% by weight of the total composition.

With regard to organic peroxides, non-limitative examples thereof are dicumyl peroxide, diterbutyl peroxide or tert-butyl hydroperoxide. The percentage in which these products enter the mixture is up to 5% by weight of the total composition.

As accelerants of the vulcanization process, metal oxides are used in the rubber vulcanization process. Non-limitative examples of vulcanization accelerating agents may be zinc oxide, lead oxide, manganese oxide, stearic oxide, zinc oxide or zinc octoate. Other useful accelerants for this invention may be the thiuram and dithiocarbamate groups. The percentages in which they enter the mixture are between 0% and 2% by weight of the total composition.

With regard to the manufacturing method, it can be performed in one or more stages, although it is even more advantageous to perform it in, at least, two stages.

Therefore, a second aspect of the present invention relates to a method for the production of the composition of the invention to operate in a single stage, which comprise adding all the components to a stirred tank and it is maintained under stirring at a temperature between 120°C and 220°C for a time between half an hour and 72 hours, preferably between half an hour and forty-eight hours.

A third aspect of the present invention relates to a method to produce the composition of the invention which comprises firstly adding the crumb rubber and then, in a second stage, creating the three-dimensional vulcanized network. To do this, the crumb rubber is added to the bitumen in a stirred tank at a temperature between 120°C and 220°C, preferably between 140°C and 200°C, and it is maintained under stirring between 30 minutes and 4 hours.

Once the desired time has been reached, the polymer or the polymer mixture, the vulcanizing agent or the mixture of vulcanizing agents and the vulcanization accelerator, if necessary, are added. The temperature of this second stage is between 120°C and 220°C, preferably between 140°C and 200°C. The preferred stirring time is between 30 minutes and 24 hours.

The stirring type is not essential to produce the compositions of the invention, and a possible operating form consists of using a stirred tank. Operating with conventional stirring in a stirred tank is necessary for at least 72 hours to achieve suitable products.

In a preferred embodiment of the method to produce the composition of the invention, it is more convenient to adapt high shear mixers, of those currently used to manufacture bitumen modified with SBS, at the outlet of the stirred tank and making the mixture that exits the tank pass through the high shear mixer, recirculating the mixture that exits the stirred tank. There are high shear mixers which are very well known and commonly used by the manufacturers of modified bitumen. Non-limitative examples of these mixers are those marketed by the companies Silverson or Sieffer. To achieve suitable results it is necessary to perform between 1 and 200 runs of the total volume of the mixture through the high shear mixer.

This two-stage method can be carried out in a stirred tank, or the first stage in one tank and the second in another, which makes it possible to perform two successive productions at the same time.

With the aforementioned operating form, systems are achieved stable to storage during prolonged periods of time of over two weeks.

However, the mechanical properties of the composition of the invention, such as, for example, penetration and softening point, may evolve over time. Therefore, it has been found to be advantageous to operate with an additional third stage, to fix the properties of the end product, wherein the product is maintained in a tank stirred at low revolutions (under 1000 rpm) at a temperature between 100°C and 200°C for a time between 20 minutes and 48 hours, and more preferably between 30 minutes and 24 hours.

Once the third stage has finished, the mechanical properties of the product are maintained constant over time.

The result is a composition with advanced features provided with the elastic characteristics and resistance of vulcanized scrap rubber and a synthetic polymer vulcanized in situ, for the building of roads with high performance properties.

Therefore, another aspect of the present invention comprises the use of the composition of the invention for the production or manufacturing of asphalt mixtures used in the building of roads.

Throughout the description and the claims, the word "comprises" and its variants do not aim to exclude other technical characteristics, additives, components or steps. For persons skilled in the art, other objects, advantages and characteristics of the invention will be gathered in part from the description and in part from the practice of the invention. The following examples are provided by way of illustration, and they do not aim to be limitative of the present invention.

### DETAILED EXPLANATION OF THE EMBODIMENTS

Below, the invention will be illustrated by tests performed by the inventors, which reveal the effectiveness of the modified bitumen.

Examples 1 and 2 below illustrate the case of direct addition of crumb rubber to the bitumen (example 1) and the use of polymers of various types to favour the stability of the crumb rubber and they are collected as reference (examples 2a and 2b). The persons skilled in the art of modifying bitumen with crumb rubber can appreciate how in the previous examples cited as reference, the systems are unstable to storage.

Example 3 shows the advantage of the use of vulcanizing agents in accordance with this invention and example 4 shows the advantage of the manufacturing system of the invention in several stages. These two examples illustrate the advantages of this invention.

The stability criteria commonly used consists of storing in a sample tube at a high temperature (163°C; 5 days) and observing the variation in the penetration and softening temperature properties between the upper and lower part of the tube. In general, differences of 10 units and 5°C, of Penetration and Softening Point respectively, can be considered acceptable for ligands modified with polymers. Due to the quantity of solids and materials non-assimilable by the bitumen that contains the crumb rubber, the indirect measurements of Penetration and Softening Point do not appropriately correlate with stability to storage and they have to be replaced by direct methods of solubility in organic solvents. Thus, once the planned storage period at 163°C has concluded, the measurement of penetration and softening point of the upper and lower parts are replaced with solvents such as Tetrahydrofurane (THF), which are capable of dissolving all the bitumen, leaving the vulcanized rubber and the solids intact. This value directly correlates to the stability to storage in Plant tanks.

### EXAMPLE 1: REFERENCE SYSTEM, BITUMEN WITH CRUMB RUBBER

10% of crumb rubber was added to the bitumen from the distillation of Arab Light crude oil (whose API grades are 33.5) with Penetration = 80 1/10 mm and a Softening Point (A and B) of 47 °C.

The process was carried out at 190°C, for 90 min, in a high shear rotor-stator mixer apparatus. After this time, the sample had a Penetration of 71 1/10 mm and a Softening Point (A and B) of 53 °C.

Measuring the stability to storage, according to standard NLT 328, and maintaining the previous sample in a closed metal tube in an oven at 163 °C for 120 hours, a difference in Softening Point was observed between the upper part and the lower part of the tube of 17 °C. The Penetration difference was 15 units, the material insoluble in the bitumen also having a high tendency to decant.

### EXAMPLE 2: ADDITION OF POLYMERS

To the same process of Example 1, 2% of SBS, percentage by weight of the total ligand, was added in the initial stage. The synthetic polymer was added with no modifications, example 2a, and pre-swollen in an oil with great solvating power, example 2b.

### EXAMPLE 2a:

The result, after adding SBS, was a ligand with penetration of 64 1/10 mm and softening point 62°C. It had more marked elastic properties due to the incorporation of the synthetic polymer, according to rheological measurements made.

The stability of the ligand was improved, in terms of a reduction in the penetration and softening point differences between the upper and lower parts of the stability tube, respectively. The difference of softening points was 11°C and the difference of penetrations was 10 1/10 mm. However, high decantability was still achieved, according to the method of solubility applied to the stability to storage test.

### EXAMPLE 2b:

In the case wherein both the crumb rubber and the synthetic polymer had been pre-swollen with oil to improve the compatibility and the stability, the process described in example 1 was expanded with a previous swelling process of the crumb rubber and SBS, at 150°C in oil, with the aid of a blade to homogenize. Then, this material was added to the bitumen and the continuous process as described in example 1.

In this case, the material produced had softening point and penetration values of 58°C and 70 1/10 mm, respectively. The stability was not affected effectively, obtaining differences of 8°C and 11 units, respectively, and observing high decantation values, with high content in non-assimilable material in the bottoms of the stability tubes obtained by solubilization and filtration.

### EXAMPLE 3: ADDITION OF VULCANIZING AGENT. EFFECT OF THE VULCANIZATION.

To the same process of Example 1, in addition to the crumb rubber, synthetic styrene-butadiene rubber (SBR) was added and it was reticulated in situ, with the help of a sulfur donor agent and a reticulation activator agent.

The manufacturing process was carried out after a single stage of component addition. The addition of the crumb rubber (10% by weight of total ligand), SBR (2% by weight of total ligand), sulfur (0.1%) and zinc oxide (0.2%) as vulcanization accelerator, was carried out at 200°C for 3 hours in a stirred tank, coupled with a high shear mixer with recirculation to the mixing tank. Once the reticulation reaction of the synthetic rubber has concluded, the result was a bituminous ligand with scrap crumb rubber with softening point and penetration properties of 66°C and 63 1/10 mm, respectively, with differences of said properties after the stability test of 2 and 1.5 units, respectively, and with little or no decantation, according to the solubility test applied on the bottom and upper part of the stability tube of the high temperature storage test.

### EXAMPLE 4: EFFECT OF MANUFACTURING IN SEVERAL STAGES.

The manufacturing process of example 3 was carried out in stages:
a first stage of addition of the crumb rubber to the bitumen (10% by weight of total ligand) was carried out in a tank stirred at a temperature of 200°C during 3 hours. In a second stage, the three-dimensional network was carried out in situ with the aid of the SBR elastomer and the vulcanizing agents. The SBR elastomer (2% by weight of total ligand) and the sulfur (0.1%) and the zinc oxide (0.2%) were added and it was maintained at 190°C for 90 minutes. At the exit of the mixing tank, a high shear rotor-stator mixer was disposed to favour the mixing of all components. Once the reticulation reaction of the synthetic rubber had concluded, the product was maintained, in a third stage, in a tank stirred at low revolutions and at 160°C for 24 hours. The result was a bituminous ligand modified with scrap crumb rubber with softening point and penetration properties of 69°C and 61 1/10 mm, respectively, with differences of said properties after the stability test of 0.7 and 0.5 units, respectively, with little or no decantation, according to the solubility test applied to the bottom and upper part of the stability tube of the high temperatures storage test.

**Table 1.- Results obtained.**

| | Standard | Example 1 | Example 2a | Example 2b | Example 3 | Example 4 |
|---|---|---|---|---|---|---|
| Penetration (1/10 mm) | NLT 124 | 71 | 64 | 70 | 63 | 61 |
| Ring-and-Ball Temperature (°C) | NLT 125 | 53 | 62 | 58 | 66 | 69 |

| Storage stability | | | | | | |
|---|---|---|---|---|---|---|
| Penetration Difference (1/10 mm) | NLT 328 | 15 | 10 | 11 | 1.5 | 0.5 |
| Ring-and-Ball Temperature Difference (°C) | NLT 328 | 17 | 11 | 8 | 2 | 0.7 |
| Difference of THF insolubles (%) | NLT 328 | 32% | 17% | 14% | 2% | 1% |

| | | | | | | |
|---|---|---|---|---|---|---|
| Standard NLT 328.- Stability to storage of modified asphaltic bitumens. Standard NLT 124.- Penetration of the bituminous materials. Standard NLT 125.- Ring-and-ball softening point of the bituminous materials | | | | | | |

## Claims

1. Composition which comprises bitumen, crumb rubber, polymer and vulcanizing agent.

2. Composition according to claim 1, where the crumb rubber has a particle size of between 0.1 to 1 mm.

3. Composition according to claim 2, where the crumb rubber has a particle size of between 0.1 to 0.8 mm.

4. Composition according to any of claims 1 to 3, where the crumb rubber is in a quantity of between 1% and 50% of the total composition.

5. Composition according to any of claims 1 to 4, where the crumb rubber is in a quantity of between 1% to 30% by weight of the total composition.

6. Composition according to claim 1, where the polymer is unsaturated and is selected from the group which comprises styrene-butadiene-styrene (SBS), styrene-butadiene rubber (SBR), natural rubber, polyisoprene, polyisobutene, nitrile-butadiene rubber, acrylate-butadiene rubber, polybutadiene, ethylene-propylene-diene monomer terpolymer, polyoctenomer (TOR), polynorbornene, polychloroprene, polyacrylate or any of their mixtures.

7. Composition according to any of claims 1 to 6, where the polymer is in a quantity of between 0.1% and 10% by weight of the total composition.

8. Composition according to any of claims 1 to 7, where the polymer is in a quantity of between 0.1% and 7% by weight of the total composition.

9. Composition according to claim 1, where the vulcanizing agent is selected from the group which comprises sulfur, a sulfur donor compound, any combination of sulfur and sulfur donor compound, phenolic resin or organic peroxide.

10. Composition according to claim 9, where the sulfur donor is selected from the group which comprises dipentamethylenthiuram tetrasulfide, tetramethylthiuram disulfide, tetrabenzylthiuram disulfide, tetraethylthiuram disulfide or tetramethylthiuram monosulfide or any of their mixtures,

11. Composition according to claim 9, where the phenolic resin is resin of phenol formaldehyde or alkylphenolformaldehíde.

12. Composition according to claim 9, where the organic peroxide is selected from the group which comprises dicumyl peroxide, diterbutyl peroxide or tert-butyl hydroperoxide.

13. Composition according to any of the preceding claims, where the vulcanizing agent is in a quantity of between 0.05% and 5% by weight of the total composition.

14. Composition according to any of the preceding claims, which further comprises a vulcanization accelerating agent of the polymer.

15. Composition according to claim 14, where the accelerating agent is selected from the group which comprises metal oxide, stearic oxide, zinc oxide, zinc octoate, zinc thiuram or zinc dithiocarbamate.

16. Composition according to either of claims 14 or 15, where the accelerating agent is in a quantity less than 2% by weight of the total composition.

17. Method to produce the composition according to any of claims 1 to 16, which comprises the addition of the components to a tank under stirring at a temperature of between 120°C and 220°C.

18. Method to produce the composition according to any of claims 1 to 16, which comprises:
a. adding the crumb rubber to the bitumen at a temperature between 120°C and 220°C; and
b. adding the other components which form the composition at a temperature of between 120°C and 220°C.

19. Method according to any of claims 17 or 18, which further comprises the stage of maintaining the composition in a tank stirred at, at least, 1000 rpm at a temperature of between 100°C and 200°C.

20. Method according to any of claims 17 to 19, where the temperature is of between 140°C and 200°C.

21. Method according to any of claims 17 to 20, which further comprises the step of the mixing the composition using a high shear mixer.

22. Method according to claim 21, where the mixture is again recirculated to the tank wherefrom it comes, again returning to the high shear mixer, the number of runs through said mixer being between 1 and 200.

23. Use of the composition according to any of claims 1 to 16 for the production of asphalt mixtures.

24. Use according to claim 23 in the building of roads.
